Europäisches Patentamt

(19) European Patent Office

Office européen des brevets

(11) Publication number : **0 103 279 B2**

(12) # NEW EUROPEAN PATENT SPECIFICATION

(45) Date of publication of the new patent specification : **18.12.91 Bulletin 91/51**

(21) Application number : **83108884.4**

(22) Date of filing : **08.09.83**

(51) Int. Cl.⁵ : **C08L 81/02**

(54) **Method for the crystallization of poly(arylene sulfide).**

The file contains technical information submitted after the application was filed and not included in this specification

(30) Priority : **09.09.82 US 416209**

(43) Date of publication of application : **21.03.84 Bulletin 84/12**

(45) Publication of the grant of the patent : **02.12.87 Bulletin 87/49**

(45) Mention of the opposition decision : **18.12.91 Bulletin 91/51**

(84) Designated Contracting States : **AT BE CH DE FR GB IT LI LU NL SE**

(56) References cited : **EP-A- 0 067 676**

(56) References cited : DE-A- 3 143 992 US-A- 4 017 450 Encyclopedia of Polymer Science and Technology, vol. 4, 1966, p. 462

(73) Proprietor : **PHILLIPS PETROLEUM COMPANY** 5th and Keeler Bartlesville Oklahoma 74004 (US)

(72) Inventor : **Senatore, Guy** 5221 S.E. Nowata Rd. Bartlesville, OK 74003 (US) Inventor : **Scoggins, Lacey Eugene** 1310 S.E. Lariat Dr. Bartlesville, OK 74003 (US)

(74) Representative : **Dost, Wolfgang, Dr.rer.nat., Dipl.-Chem. et al** Patent- und Rechtsanwälte Bardehle-Pagenberg-Dost-Altenburg & Partner Postfach 86 06 20 W-8000 München 86 (DE)

## Description

This invention relates to the production of arylene sulfide polymer. In one of its aspects, this invention relates to a method by which the crystallization of poly(arylene sulfide) which has been prepared using an additive that reduces the melt flow of the polymer, particularly polymer prepared with alkali metal carboxylate, is affected. In another of its aspects, this invention relates to a method for lowering the rate of crystallization of poly(arylene sulfide). In yet another of its aspects, this invention relates to the lowering of the melt crystallization temperature (Tmc) of poly(arylene sulfide). In still another aspect of the invention, it relates to end products having improved physical properties that are produced from poly(arylene sulfide) that is treated by the method of the present invention.

DE-A-3 143 992 describes the reduction of ash content of PPS.

EP-A-67 676 describes a PPS composition containing metal compounds of such metals as lead, zinc, etc.

US-PS 4 071 509 describes a purification process for PPS employing an organic amide and an alkali metal carboxylate or carbonate and selected lithium halides.

Generally in the preparation of poly(arylene sulfide), or more particularly poly(phenylene sulfide), particulate polymer, after separation from the reaction mixture, is subjected to a series of washing operations to remove residual sodium chloride by product and other, particularly ash-producing, contaminants. We have observed that polymer passing through a series of wash operations is subject to an increase in the melt crystallization temperature (Tmc). Since the production of end products from poly(phenylene sulfide) often requires or is benefitted by lower Tmc values than would be obtained after succession of purified water washings, an investigation was initiated to determine the reason for the increase in Tmc. From this investigation, it was found that the removal of polyvalent metal ions by extraction from the polymer in the purified water washes was the cause of the increase in Tmc. It was then discovered that the process could be reversed to bring about a lowering of the Tmc and to provide poly(phenylene sulfide) with a decreased rate of crystallization. The polymers produced by this treatment were found, when used in film and fiber production, to provide greater processing time for increasing stretch orientation and draw, respectively, because of the slow melt crystallization rate. In the production of molded objects, the slow rate of crystallization was found to prevent internal cracking because more time for stress relaxation is available during cooling.

It is, therefore, an object of this invention to provide a method for affecting the crystallization of poly(arylene sulfide), more particularly poly(phenylene sulfide). It is still another object of this invention to provide polymer of arylene sulfide having a lower melt crystallization temperature (Tmc) and, therefore, a slower melt crystallization rate than the same polymer would have without being treated by the present process.

It is still another object of this invention to provide polymeric end products such as fibers, film, and molded objects which have physical characteristics improved over those characteristics which they would have without being treated by the process of the present invention.

Other objects, aspects, and the several advantages of the invention will be apparent to those skilled in the art upon a study of the specification and the appended claims.

The present invention resides in a process as defined in claim 1. Preferred embodiments are contained in the dependent claims.

According to the invention, a method in accordance with claim 1 is provided for affecting the crystrallization of poly(arylen sulfide).

In accordance with an embodiment of the invention, the crystallization of phenylene sulfide particulate polymer is affected by heating the polymer slurry in an aqueous medium in the presence of at least one wate soluble chemical compound selected from oxides and hydroxides of metals of Group IA and IIA of the Periodic Table under conditions of temperature and for a period of time sufficient to reduce the melt crystallization temperature and the rate of crystallization of the polymer. The treatment is normally carried out with purified, particulate resins to expedite contact with the treating agent. The treating step can be carried out with dry resins after it has been purified substantially to remove the contaminants, such as metal halides, organic solvent, metal sulfide, and other impurities which can be present in the crude reaction product.

Arylene sulfide polymers, particularly poly(phenylene sulfide), that can be employed in the process of this invention include those polymers, generally, which have been prepared by use of a p-dihalobenzene, an alkali metal sulfide, an organic amide, and an additive that reduces the melt flow of the polymer produced as compared with the polymers produced without the use of the additive, such as is particularly illustrated by the use of an alkali metal carboxylate as in U.S. Patent No. 3,919,177. Optionally, the polymer can be produced with the above components together with an alkali metal hydroxide, such as sodium hydroxide, e.g., in an amount up to about 0.8 mol of alkali metal hydroxide per mole of alkali metal sulfide and/or a polyhaloaromatic compound such as 1,2,4-trichlorobenzene, e.g., in an amount up to about 0.6 parts by weight per 100 parts by weight p-dihalobenzene. Lithium halides are alternative additives which can be used to produce polymer of reduced melt flow. If desired, water which can be present with the reactants can be removed by distillation prior to the polymerization reaction. The polymers produced will generally have a melt flow within the range of about 40-to about 150.

The particulate resin useful in this invention which is typified by poly(phenylene sulfide) as made according to U.S. Patent No. 3,919,177 can be recovered from the reaction process as a free flowing white powder having a particle size range averaging from about 5 to about 1500 μm, generally ranging from about 10 to about 150 μm or it can be recovered as a core particulate polymer. Although the process of this invention is applicable to polymers of various particle sizes, the process is more easily carried out with more finely divided particles.

It is to be understood that the processes of this invention can be carried out in a number of ways. In one manner of operation, the reaction mass comprising particulate polymer, alkali metal halide, an organic amide can be subjected to suitable separation techniques to recover polymer substantially free of organic amide, unreacted reactants, and alkali metal halides. For example, the polymer can be recovered from the reaction slurry and then combined with water to extract ash-forming materials. As has been alluded to above, the amount of impurities removed by water extraction methods certainly affects the degree to which the present inventive treatment will be required. The invention seeks to produce a particulate polymer having a residual mono- or polyvalent metal cation content in the range of about 50 to about 5000 ppm, preferably about 100 to about 3000 ppm.

The treating agents suitable for this invention are water soluble and are selected from oxides an hydroxides of mono- and polyvalent alkali and alkaline earth metal elements of Periodic Groups IA and IIA since many of these are colorless, water soluble, and relatively inexpensive. Particularly useful are hydroxides of alkali and alkaline earth metals. At present, the preferred compound for use in this invention is calcium oxide or its hydrated form, calcium hydroxide.

In accordance with an embodiment of this invention, phenylene sulfide polymer is contacted in an aqueous slurry with at least one chemical treating agent as defined herein at an elevated temperature and for a period of time sufficient to affect the crystallization of the polymer. The effectiveness of the treatment can be assessed by noting the change in the melt crystallization temperature which should be lowered by the treatment. The determination of melt crystallization temperature is well known in the art.

The treating to affect the crystallization of the polymer should be carried out at an elevated temperature which is below the melting point of the polymer for a period of time sufficient to decrease the melt crystallization temperature of the polymer. The contacting will be at least about 149°C (300°F) and will not exceed about 13.9°C (25°F) below the melting point of the polymer. Ordinarily, the contacting temperature will be in the range of about 177°C (350°F) to about 271°C (520°F).

The time for treatment or contacting can vary greatly depending on the temperature and the nature of the arylene sulfide polymer. It generally will be within the range of about 5 minutes to about 24 hours, preferably about 30 minutes to about 10 hours. In general, it can be said that the contact time decreases with increasing temperature. The pressure should be sufficient to maintain liquid phase conditions which can range from about 0 to about $10{,}34 \cdot 10^6 Pa$ (1500 psi). Repeated treatments can be employed, if desired, or the process can be carried out in several phases, if desired.

The polymer/water slurry can consist of about 10 to about 60 weight per cent polymer and more preferably from about 20 to about 50 weight per cent polymer to provide convenient handling and separation factors.

After normal purification and drying steps, the resin is left in the particulate size and form at which the process started. As stated above, utilization of finely divided resins will expedite contact with the water and treating agent.

The process of this invention can be conducted batchwise or continuously.

The heating and contacting of the chemical treating agent can be carried out in conventional equipment. A convenient method for carrying out the process is to contact the polymer slurry with a chemical treating agent in an enclosed tank provided with agitation. The contacting can be carried out in a single vessel or in a plurality of vessels. The polymer can be separated from the slurry after contacting by suitable techniques including pressure reduction and filtration. The polymer is subsequently dried for further use as desired. Such further uses as extrusion into sheets, extrusion into film, spinning into fiber, or molding into molded objects can be contemplated.

The following examples are intended to illustrate the compositions and process of the invention.

Example I

In this example the preparation of a representative poly(phenylene sulfide) Ryton® A resin from a reaction mixture containing sodium sulfide, N-methyl-2-pyrrolidone (NMP), sodium acetate, water, p-dichlorobenzene (DCB), and 1,2,4-trichlorobenzene (TCB) is described.

10.7 kg (23.5 lb) of sodium acetate and 97.3 liters (25.7 gallons) of NMP were charged to a Ryton® pilot plant reactor, which was then purged three times with nitrogen. An aqueous sodium sulfide solution formed by mixing 32.9 kg (72.6 lb) of a 50.34 wieght-% NaOH solution and 39.8 kg (87.7 bl) of a solution containing 58.99 weight-% NaHS and 0.21 weight-% $Na_2S$ was added to the reactor. Feed lines were flushed with 30.3 liters (8.0 gallons) of NMP, which was also charged to the reactor. The reactor content was the dehydrated for 90 minutes at 90 x 10³ Pa (gauge) (13 psig) and a temperature ranging from 167°C (332°F) (initial) to about 232°C (450°F) (final).

Subsequently 60.3 kg (132.9 lb) of DCB were charged, and the polymerization reaction was carried out for about 2 hours 20 minutes at a temperature ranging from 231°C (447°F) (initial) to 266°C (510°F) (final) and a pressure ranging from 207 x 10³ Pa gauge (30 psig) (initial) to 931 x 10³ Pa gauge (135 psig) (final). After one hour at about 264°C (508°F), 90 ml of TCb and 7.6 liters (2.0 gallons) of NMP were added, and the polymerization was continued for 2 more hours at a temperature of about 265°C (509°F) and a pressure of about 1000 x 10³ Pa (gauge) (145 psig).

38 liters (ten gallons) of deionized water were charged to the reactor after cooling to accomplish the separation to a molten PPS phase and an NMP-containing phase. Thereafter, the reactor mixture was cooled to about 101°C (213°F), under a nitrogen pressure of about 690 x 10³ Pa (gauge) (100 psig), and was transferred to a dilution tank containing 189 liters (50 gallons) of deionized water. After filtration, the polymer filter cake was washed once with 454 liters (120 gallons) cold deionized water 21°C (70°F) and twice with 303 liters (80 gallons) of hot deionized water 177°C (350°F) and filtered after each wash.

Example II

Eight wet poly(phenylene sulfide) batches prepared and washed in accordance with the procedure described in Example I were treated as follow. Half of each of the wet resin batches was dried at about 93-149°C (200-300°F) under atmospheric pressure conditions for about 3 hours and used as control runs. The other half of each batch was treated for about 1 hour with aqueous solutions containing ionic metal compounds in a stirred vessel at 177°C (350°F). Pertinent data of untreated resins (designated A) and treated resins (designated B) are listed in Table I.

TABLE I

| Run | Treating agent | Concentration[a] (as ppm CaO in H₂O) | $T_{mc}$[b] (°C) | Flow rate[c] after 5 minutes | (g/10 min.) after 30 minutes | Ash weight % | Insolubles[d] (ppm) |
|---|---|---|---|---|---|---|---|
| 1A | None | 0 | 225 | 98 | 367 | 0.11 | 53 |
| 1B | Calcium oxide (invention) | 530 | 160 | 42 | 122 | 0.29 | 37 |
| 2A | None | 0 | 198 | 45 | 123 | 0.13 | 20 |
| 2B | Calcium oxide (invention) | 265 | 183 | 25 | 97 | 0.34 | 30 |
| 3A | None | 0 | 224 | 70 | 160 | 0.09 | 33 |
| 3B | Tap water (comparison) | 225 | 217/191 | 55 | 152 | 0.10 | 29 |
| 4A | None | 0 | 227 | 180 | 312 | 0.03 | — |
| 4B | Calcium acetate (comparison) | 530 | 210 | 141 | 267 | 0.14 | — |
| 5A | None | 0 | 210 | 137 | 246 | 0.06 | — |
| 5B | Calcium chloride (comparison) | 530 | 204 | 139 | 310 | 0.09 | — |
| 6A | None | 0 | 222 | 93 | 187 | 0.06 | — |
| 6B | Magnesium hydroxide (invention) | 530 | 173 | 74 | 137 | 0.68 | — |
| 7A | None | 0 | 197 | 77 | 127 | 0.18 | — |
| 7B | Sodium hydroxide (invention) | 530 | 179 | 69 | 109 | 0.24 | — |
| 8A | None | 0 | — | — | — | — | — |
| 8B | Barium hydroxide (invention) | 229 | 180 | 48 | 88 | 0.31 | — |

[a]
$$\frac{\text{ppm of dissolved compound}}{\text{formula weight of dissolved compound}} \times 56.1$$

[b] determined with a Perkin Elmer DSC-2C differential scanning calorimeter with attached 3500 Data Station; cooling of the polymer melt started at 360°C; rate of cooling was 20°C/minute.

[c] determined at 316°C according to a modified ASTM D1238 method employing an orifice of 0.21 cm (0.0825") diameter and a 0.800 cm (0.315") length and an effective weight of 5.0 kg (including the weight of the piston.

[d] determined by weighing the dried residue of the dissolution of PPS in 1-chloronaphthalene at 235—245°C; 4 samples of 40 grams each are placed in a 325 mesh screen basket and immersed in 1.0 liter of 1-chloronaphthalene.

EP 0 103 279 B2

Data in Table I show that treatment of wet PPS resin with aqueous solutions of ionic compounds, preferably alkali metal and alkaline earth metal hydroxides (Runs 1B, 2B, 6B 7B, 8B) results in a substantial lowering of the melt crystallization temperature, Tmc, to about 160-180°C. Metal chlorides do not appear to be effective (Run 5B). Ash levels increased, yet generally stayed at acceptable levels of about 0.2-0.7 weight-%. The flow rate of treated PPS generally decreased, which indicates some crosslinking action of metal ions, particularly divalent ions ($Ca^{2+}$, $Mg^{2+}$, $Ba^{2+}$). The characteristic flow rate increase by a factor of about 2-3 of uncured, branched PPS after heat-soaking for about 30 minutes vs. flow rate after heating for only 5 minutes was hardly affected by the treatment with dissolved ionic compounds.

Example III

Eight samples of Ryton® A PPS treated with solutions of 526 ppm of calcium oxide in water essentially in accordance with the procedure of Example II and having a melt crystallization temperature, Tmc (see footnote to Table I), of 175-193°C, were extruded into films after having been pelletized on a 2.54 cm (1″) NRM extruder at a die temperature of about 321°C (610°F) and dried overnight in a Blue M oven at 210-230°F.

The extrusion was carried out on a 2.54 cm (1″) NRM extruder without screens through a 0.0254 cm x 7.62 cm (0.010″ x 3″) slot die having a temperature of 321°C (610°F). The extruded film was passed over a pair of heated rolls having a temperature of 79°C (175°F) and was then taken up.

Tmc values of extruded films measured in accordance with the procedure described in Example II ranged from about 186°C to 204°C. The appearance of all eight films was rated "5" based on the following scale: "1" (covered with bubbles), "2" (many bubbles), "3" (bubbles easily noticed), "4" (very few small bubbles), "5" (no bubbles).

Example IV

PPS washed with aqueous solutions containing 424 ppm of CaO, essentially in accordance with the procedure of Example II were spun into fibers. The lime-washed resin, which had a flow rate of 143 g/10 minutes and a Tmc (starting from 360°C; see footnote to Table I) of 193°C, was vacuum-dried overnight at 110-120°C. The water-cooled polymer feed was extruded in a 2.54 cm (1″) Wayne Machine and Die Co. extruder through 60/100/200/Dynalloy XIIL/60 mesh pack screens and a spinneret having 34 holes of 0.12 cm (0.048″) length and 0.03 cm (0.012″) diameter. The block temperature was about 300°C, and the polymer extrusion rate was about 13.9 grams per minute.

The extruded strand of 34 yellow PPS filaments was drawn over a hot plate at 100°C to a draw ratio of 4.0. Pertinent physical data of the drawn yarn were; denier: 229; tenacity: 3.7 grams per denier; elongation: 19%; initial modulus: 47 grams per denier. Tenacity, modulus and elongation were determined on an Instron® 1122 tensile tester; the yarn was stretched at a rate of about 200 mm/minute.

## Claims

1. A method for affecting the crystallization of poly(arylene sulfide) by treating said poly(arylene sulfide) with oxide or hydroxide of mono- or polyvalent metal cations selected from metals of Groups IA and IIA of the Periodic Table in aqueous solution at an elevated temperature in the range from 149°C to a temperature not exceeding 13.9°C below the melting point of the polymer, characterized in that the concentration of said oxide or hydroxide in said aqueous solution is in the range of 225 to 530 ppm, wherein this concentration is calculated by the formula

$$\frac{\text{ppm dissolved oxide or hydroxide}}{\text{formula weight of dissolved oxide or hydroxide}} \cdot 56.1$$

and is kept at a value to provide a residual concentration from 50 to 5000 ppm metal cations in the polymer after the treatment.

2. The method of claim 1 characterized in that the rate of crystallization of said poly(arylene sulfide) is lowered.

3. The method of claim 1 characterized in that the melt crystallization (Tmc) of said poly(arylene sulfide) is lowered.

4. The method of any of claims 1 to 3 characterized in that said elevated temperature is in the range from 177 to 271°C.

5. The method of any of claims 1 to 4 characterized in that the metal cation is supplied by an aqueous solution of calcium oxide.

6. The method of any of claims 1 to 5 characterized in that said poly(arylene sulfide) is poly(phenylene sulfide).

7. The use of the poly(arylene sulfide) prepared according to any of claims 1 to 6 for making sheets, films, fibers, extruded objects or molded objects.

## Patentansprüche

1. Verfahren zur Beeinflußung der Kristallisation von Polyarylensulfid durch Behandeln des Polyarylensulfids mit Oxid oder Hydroxid von mono- oder polyvalenten, aus Metallen der Gruppen IA und IIA des Periodensystems ausgewählten Metallkationen in wässriger Lösung bei erhöhter Temperatur im Bereich von 149°C bis zu einer Temperatur, die 13,9°C unterhalb des Schmelzpunktes des Polymers nicht übersteigt, **dadurch gekennzeichnet,** daß die Konzentration des Oxids oder Hydroxids in wässriger Lösung im Bereich von 225 bis 530 ppm liegt, wobei die Konzentration durch die Formel

$$\frac{\text{ppm gelöstes Oxid oder Hydroxid} \cdot 56{,}1}{\text{Formelgewicht von gelöstem Oxid oder Hydroxid}}$$

berechnet wird und bei einem Wert gehalten wird, der eine Restkonzentration von 50 bis 5000 ppm Metallkationen in dem Polymer nach der Behandlung ergibt.

2. Verfahren nach Anspruch 1, dadurch gekennzeichnet, daß die Kristallisationsgeschwindigkeit des Polyarylensulfids abgesenkt wird.

3. Verfahren nach Anspruch 1, dadurch gekennzeichnet, daß die Schmelzkristallisationstemperatur (Tmc) des Polyarylensulfids abgesenkt wird.

4. Verfahren nach einem der Ansprüche 1 bis 3, dadurch gekennzeichnet, daß die erhöhte Temperatur im Bereich von 177 bis 271 °C liegt.

5. Verfahren nach einem der Ansprüche 1 bis 4, dadurch gekennzeichnet, daß das Metallkation durch eine wässrige Lösung von Calciumoxid geliefert wird.

6. Verfahren nach einem der Ansprüche 1 bis 5, dadurch gekennzeichnet, daß das Polyarylensulfid Polyphenylensulfid ist.

7. Verwendung des nach einem der Ansprüche 1 bis 6 hergestellten Polyarylensulfids zur Herstellung von Folien, Filmen, Fasern, extrudierten Gegenständen oder geformten Gegenständen.

## Revendications

1. Procécé pour affecter la cristallisation d'un poly(sulfure d'arylène) en traitant ce poly(sulfure d'arylène) par un oxyde ou hydroxyde de cations mono- ou polyvalents choisis parmi les métaux des groupes IA et IIA de la Classification Périodique en solution aqueuse, à une température élevée dans l'intervalle d'environ 149°C à une température ne dépassant pas 13,9°C au-dessous du point de fusion du polymère, caractérisé en ce que la concentration de cet oxyde ou hydroxyde dans cette solution aqueuse est dans l'intervalle de 225 à 530 ppm, cette concentration étant calculée par la formule

$$\frac{\text{ppm d'oxyde ou d'hydroxyde dissous} \times 56{,}1}{\text{masse moléculaire de l'oxyde ou de l'hydroxyde dissous}}$$

et est maintenue à une valeur telle qu'elle fournisse une concentration résiduelle de 50 à 5000 ppm de cations métalliques dans le polymère après le traitement.

2. Procédé de la Revendication 1, caractérisé en ce que la vitesse de cristallisation de ce poly(sulfure d'arylène) est abaissée.

3. Procédé de la Revendication 1, caractérisé en ce que la température de cristallisation à l'état fondu (Tmc) de ce poly(sulfure d'arylène) est abaissée.

4. Procédé suivant l'une quelconque des Revendications 1 à 3, caractérisé en ce que cette température élevée est dans l'intervalle de 177 à 271°C.

5. Procédé suivant l'une quelconque des Revendications 1 à 4, caractérisé en ce que le cation métallique est fourni par une solution aqueuse d'oxyde de calcium.

6. Procédé suivant l'une quelconque des Revendications 1 à 5, caracterisé en ce que ce poly(sulfure d'arylène) est du poly(sulfure de phénylène).

7. Utilisation du poly(sulfure d'arylène) préparé conformément à l'une quelconque des Revendications 1 à 6 pour fabriquer des feuilles, films, fibres, objets extrudés ou objets moulés.